# EUROPÄISCHE PATENTSCHRIFT

(11) **EP 0 846 033 B1**
(45) Veröffentlichungstag und Bekanntmachung des Hinweises auf die Patenterteilung: **04.12.2002**
(21) Anmeldenummer: 97923999.3
(22) Anmeldetag: 26.05.1997
(51) Int. Cl.: B05D 3/02, B05D 7/08

(54) **BESCHICHTUNG EINES WÄRMEEMPFINDLICHEN WERKSTOFFS MIT EINEM PULVERLACK**
APPLICATION OF A HEAT-SENSITIVE MATERIAL WITH POWDER PAINT
APPLICATION D'UNE PEINTURE EN POUDRE SUR UN MATERIAU THERMOSENSIBLE

(30) Priorität: 07.06.1996 DE 19622921
(43) Veröffentlichungstag der Anmeldung: 10.06.1998
(73) Patentinhaber: BASF Coatings Aktiengesellschaft, 48165 Münster (DE)
(72) Erfinder: KUNZE, Peter, Eduard, D-48317 Drensteinfurt (DE); KIRIAZIS, Leonidas, D-48151 Münster (DE)
(74) Vertreter: Fitzner, Uwe, Dr.
(86) Internationale Anmeldenummer: EP9702674
(87) Internationale Veröffentlichungsnummer: WO97047398

(56) Entgegenhaltungen:
- EP-A- 0 390 636
- WO-A-90/02613
- CA-A- 1 317 826

## Beschreibung

Die vorliegende Erfindung betrifft die Beschichtung von wärmeempfindlichen Werkstoffen, vorzugsweise Holz mit darauf aufgebrachten Pulverlacken.

Die Orientierung an umweltschonenden Technologien ist von den sich verschärfenden Vorschriften zur Reinhaltung der Luft gekennzeichnet. Aus diesem Grunde ist man heute auch bei der Beschichtung von Holz und Holzwerkstoffen, bestrebt, diese Technologien zum Einsatz zu bringen. Für die Beschichtung derartiger Substrate spielt die Pulverlacktechnologie bisher keine industriell bedeutende Rolle und ist über die ersten Versuche nicht hinausgekommen. Übersichten zu diesem Thema sind u.a. Alfred Krüger, Magdeburg, Josef Heinskill, Braunschweig "Möglichkeiten der Pulverbeschichtung von Holz- und Holzwerkstoffen", DFO-Tagungsbericht 1994; Istvan Radoczy, Tigerwerk A-Wels "Das Wood-Dual Verfahren zur MDF-Veredelung", I-Lack 3/95, S. 96-98; Danilo Malavolti "Polveri nella verniciatura del legno e deli plastici?", La Rivista del Colore/Verniciatura Industriale Nr. 281, Sep. 1991, S. 277-278; Simon Peter Hödlmoser, Hali Büromöbel, A-Eferding "Pulverbeschichtung von MDF-Platten in der Praxis", JOT-Seminarunterlagen München 01/1995; G. Sauerbrey "Holzbeschichtung im Aufbruch", Tagungsberichte der Pulvertagung 1991 im CC Hamburg, Vinzenz Verlag Hannover (Abk. TB Pulver 91); anonym "Powder coating of wood and woodbased materials", DTI-Surface Coatings Technology, Aug. 93; Leonardo Zelaschi "Novita dal mondo dei vernicianti e della verniciatura", La rivista del colore/Verniciatura industriale Nr. 241, Mai 1988, S. 165-166 zu entnehmen.

Für die bis heute bestehenden Schwierigkeiten ist eine Reihe technischer Ursachen verantwortlich. Holz ist ein natürlicher, inhomogener und hydroskopischer Werkstoff. Seine Eigenschaften und Eigenarten werden durch viele Einflußfaktoren während seines Wachstums und seiner Verarbeitung geprägt. Als organisches Material unterliegt es auch während seiner Bearbeitung und Nutzung einer ständigen Beeinflussung durch die Umwelt.

Die Inhaltsstoffe von Hölzern, darunter die Holzfeuchte, spielen eine entscheidende Rolle. Mit der Änderung der Holzfeuchte ändert sich nicht nur das Volumen, wobei die Anisotropie in den anatomischen Hauptrichtungen problemverstärkend hinzukommt, sondern beispielsweise auch die elektrische Leitfähigkeit und das Benetzungsverhalten.

Unterschiedliches Quellen und Schwinden der Werkstoffe und Beschichtungen bei der Veränderungen des Feuchtegehaltes führen zu einer enormen mechanischen Beanspruchung der Verbundsysteme und frühzeitigem Versagen an kritischen Stellen. Holzinhaltsstoffe wandern an die Oberfläche und können zu starken Verfärbungen und unkontrolliertem chemischen Reaktionen mit Beschichtungsstoffen führen.

Probleme bei der Pulverbeschichtung von Holz- oder Holzwerkstoffen bereitet das Entweichen flüchtiger Stoffe wie Wasser, Harze, Wachse und Terpenen aus dem Substrat, verursacht durch die erforderliche hohe Filmbildetemperatur der Pulverlacke. Diese flüchtigen Bestandteile führen zu Blaseneinschlüssen im Film. Dies verschlechtert wiederum seine chemische Beständigkeit, die mechanischen Eigenschaften und das Aussehen der Lackoberfläche. Um das Ausgasen des Untergrundes zu verringern und das Entlüften der Schmelze zu unterstützen, ist eine möglichst niedrige Schmelz- und Vernetzungstemperatur bei möglichst niedriger Viskosität des geschmolzenen Pulverlackes erforderlich. Allerdings sind diesen Forderungen mit Rücksicht auf die Lagerstabilität und die Verarbeitbarkeit der Pulverlacke Grenzen gesetzt. Die hohen Ansprüche der Möbelindustrie an perfekte, homogene Oberflächen bedeuten weiterhin eine Herausforderung an die Verlaufseigenschaften derartiger Pulverlacke.

Eine einfache Übertragung der technologischen Bedingungen der Pulverlackbeschichtung, die sich auf metallischen Untergründen bewährt haben, ist aus den genannten Gründen nicht möglich.

In I. Radoczy, I-Lack 3/95, 63. Jahrgang, S. 96 ff. wird aus diesem Grunde vorgeschlagen, eine Symbiose von Pulverlack mit Wasserlack einzusetzen. Der Autor schlägt eine auf das Holz abgestimmte Rezeptur eines Wasserlackes vor, mit dem das Substrat sich benetzen wird. Mittels dieses Wasserlackes wird eine die Haftung des Pulverlackes auf dem Holzsubstrat bewirkt. Nachteilig bei diesem Verfahren ist jedoch, daß die Vorteile der völlig emissionsfreien trockenen Pulverlacke nicht genutzt werden. Es besteht daher nach wie vor ein Bedürfnis, Pulverlacke ohne Zusatz von Wasserlacken zum Einsatz zu bringen.

Aufgabe der vorliegenden Erfindung ist es daher, einen Schichtstoff bestehend aus einem Substrat aus wärmeempfindlichem Werkstoff, vorzugsweise Holz und einer darauf aufgebrachten Pulverlackschicht zur Verfügung zu stellen, bei der zugleich eine Minimierung der Blasenbildung und eine Optimierung der Verlaufseigenschaften und der Vernetzung gewährleistet ist.

Diese Aufgabe konnte erfindungsgemäß durch das Verfahren nach Anspruch 1 mit den folgenden Verfahrensmerkmalen gelöst werden :
a) Erhitzen des Substrats mittels Mikrowellenstrahlung,
b) Aufbringen eines Pulverlackes auf die Substratoberfläche, vorzugsweise mittels
   elektrostatischem Spritzverfahrens,
c) Erhitzen des Pulverlacks auf Sintertemperatur und
d) anschließendes Härten der Lackschicht.

Als Substrate für die Beschichtung kommen alle wärmeempfindlichen Werkstoffe in Betracht, z.B. bestimmte Massivhölzer, Hartfaser- und Mitteldichteplatten (MDF). Insbesondere sind solche Werkstoffe erfindungsgemäß einsetzbar, die in der Möbelindustrie Anwendung finden. Mit dem erfindungsgemäßen Schichtstoff sollen insbesondere die bisherigen Möbeloberflächen durch ein emissionsfreies System ersetzt werden.

Die erfindungsgemäß eingesetzten Pulverlacke enthalten vorzugsweise Epoxidharze, Carboxypolyester, Katalysatoren, Hilfsstoffe sowie ggf. Hilfsmittel und pulvertypische Additive, Rieselhilfen.

Die Epoxidharze auf Basis von Bisphenol A und Bisphenol F weisen im allgemeinen eine Funktionalität von 2, die expoxidierten Novolackharze eine Funktionalität von größer 2 auf. Besonders bevorzugt werden in den erfindungsgemäßen Pulverlacken epoxidierte Novolackharze mit einer mittleren Funktionalität im Bereich von 2,4 bis 2,8 und mit einem Epoxidäquivalentgewicht im Bereich von 600 bis 850. Bei den epoxidierten Novolackharzen kann ein Teil der phenolischen Hydroxylgruppen mit Alkyl oder ähnlichen Gruppen verethert sein. Durch Umsetzung der phenolischen Hydroxylgruppen mit Epichlorhydriden werden Epoxidgruppen in das Molekül eingebracht. Ausgehend von Novolacken bildet sich dabei der sog. Epoxid-Novolack. Die epoxidierten Novolacke sind strukturverwandt mit Bisphenol A-Harzen. Epoxidierte Novolackharze können hergestellt werden durch Epoxidierung von Novolacken, die z.B. aus 3 bis 4 Phenolkernen, welche über Methylenbrücken miteinander verbunden sind, bestehen. Als Novolackharze können auch alkylsubstituierte Phenole, welche mit Formaldehyd umgesetzt werden, verwendet werden.

Geeignete Epoxidharze sind beispielsweise die unter folgenden Namen im Handel erhältlichen Produkte, wie Araldit, Grilesta oder Epikote.

Die in den erfindungsgemäßen Pulverlacken eingesetzten Epoxidharze (Komponente A) sind feste Epoxidharze mit einem Epoxidäquivalentgewicht von 300 bis 5500, vorzugsweise 800 bis 3000. Geeignet sind aromatische, aliphatische und/oder cycloaliphatische Epoxidharze. Bevorzugt werden aromatische Epoxidharze auf Basis Bisphenol-A und/oder Bisphenol-F und/oder Epoxidharze vom Novolak-Typ eingesetzt. Besonders bevorzugt eingesetzte Epoxidharze auf Basis Bisphenol-A oder Bisphenol-F weisen ein Epoxidäquivalentgewicht von 500 bis 2000 auf. Besonders bevorzugt eingesetzte Epoxidharze vom Novolak-Typ weisen ein Epoxidäquivalentgewicht von 500 bis 1000 auf.

Selbstverständlich können auch andere Epoxidharze, wie z.B. Alkylenglykoldiglycidylether oder deren verzweigte Folgeprodukte, mit Alkylenglykolen flexibilisierte Epoxidharze auf Basis Bisphenol-A bzw. -F o.ä. eingesetzt werden. Ferner sind auch Mischungen verschiedener der genannten Epoxidharze geeignet.

Als epoxifunktionelles Bindemittel für die Pulverklarlacke sind beispielsweise auch epoxidgruppenhaltige Polyacrylatharze geeignet, die durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxdgruppe im Molekül enthält, herstellbar sind, wobei mindestens eines der Monomere ein Ester der Acrylsäure oder Methacrylsäure ist.
Epoxidgruppenhaltige Polyacrylatharze sind z.B. EP-A-299 420, DE-B-22 14 650, DE-B-27 49 576, US-A-4 091 048 und US-A-3 781 379 bekannt.

Als Beispiele für die ethylenisch ungesättigten Monomere, die mindestens eine Epoxidgruppe im Molekül enthalten, werden Glycidylacrylat, Glycidylmethacrylat und Allylglycidylether genannt.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säuren wie z.B. Acrylsäure und Methacrylsäure. Säureamid, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Das epoxidgruppenhaltige Polyacrylatharz weist überlicherweise ein Epoxidäquivalentgewicht von 400 bis 2500, vorzugsweise 500 bis 1500, besonders bevorzugt 600 bis 1200, ein zahlenmittleres Molekulargewicht (gelpermeationschromatographisch unter Verwendung eines Polystyrolstandards bestimmt) von 1000 bis 15000, vorzugsweise 1200 bis 7000, besonders bevorzugt von 1500 bis 5000 und eine Glasübergangstemperatur (T_{G}) von 35 bis 75, vorzugsweise von 40 bis 70, besonders bevorzugt von 40 bis 60 ° C auf (gemessen mit Hilfe der differential scanning calometrie (DSC)).

Das epoxidgruppenhaltige Polyacrylatharz kann nach allgemein gut bekannten Methoden durch radikalische Polymerisation hergestellt werden.

Säurefunktionelle Bindemittel können als Härter für die beschriebenen epoxifunktionellen Acrylate dienen.

Als säurefunktionelles Bindemittel sind beispielsweise saure Polyacrylatharze geeignet, die durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppe im Molekül enthält, herstellbar sind.

Die in den erfindungsgemäßen Pulverlacken ggf. eingesetzten Polyester weisen eine Säurezahl von 25 bis 120 mg KOH/g, bevorzugt 30 bis 90 mg KOH/g und besonders bevorzugt 60 bis 90 mg KOH/g sowie eine OH-Zahl von mindestens 10 mg KOH/g, bevorzugt von mindestens 15 mg KOH/g und bevorzugt kleiner gleich 30 mg KOH/g auf. Bevorzugt werden Polyester mit einer Funktionalität ≥ 2 eingesetzt. Die zahlenmittleren Molekulargewichte der Polyester liegen im allgemeinen zwischen 1000 und 10000, bevorzugt zwischen 1500 und 5000. Bevorzugt werden FDA-zugelassene (FDA Food, and Drug Administration) Polyester eingesetzt.

Zur Aushärtung der epoxifunktionellen Bindemittel sind erfindungsgemäß auch phenolische Härter geeignet.

Als Härterkomponente geeignet sind alle festen Verbindungen mit mehr als einer phenolischen OH-Gruppe, bevorzugt 1,8 bis 4 und besonders bevorzugt ≤ 3 phenolische OH-Gruppen pro Molekül und einem Hydroxyl-Äquivalentgewicht, bezogen auf OH-Gruppen von 100 bis 500, bevorzugt 200 bis 300. Voraussetzung ist, daß die Kombination aus epoxifunktionellen Bindemitteln und dem Phenolharz bei einer Einbrenntemperatur von unter 140 °C reagiert und eine sehr niedrige Vergilbung zeigt.

Die Epoxidharzkomponente wird in den erfindungsgemäßen Pulverlacken üblicherweise in einer Menge von 29 bis 80 Gew.-%, bevorzugt von 35 bis 60 Gew.-%, jeweils bezogen auf das Gesamtgewicht des Pulverlacks, eingesetzt.

Die Härterkomponente wird in den erfindungsgemäßen Pulverlacken üblicherweise in einer Menge v on 20 bis 71 Gew.-%, bevorzugt von 40 bis 65 Gew.-%, jeweils bezogen auf das Gesamtgewicht des Pulverlacks, eingesetzt.

Die erfindungsgemäßen Pulverlacke enthalten 50 bis 90 %, vorzugsweise 60 bis 80 Gew.-% Bindemittel und 10 bis 50 Gew.-%, vorzugsweise 20 bis 40 Gew.-% Füllstoffe.

Die erfindungsgemäßen Pulverlacke enthalten einen oder mehrere geeignete Katalysatoren für die Epoxidharz-Aushärtung. Geeignete Katalysatoren sind Phosphonium-Salze organischer oder anorganischer Säuren, Imidazol und Imidazolderivate, quartäre Ammoniumverbindungen sowie Amine. Die Katalysatoren werden im allgemeinen in Anteilen von 0,001 Gew.-% bis etwa 10 Gew.-%, bezogen auf das Gesamtgewicht des Epoxidharzes und des phenolischen Vernetzungsmittels, eingesetzt.

Vorteilhafterweise einsetzbar ist auch als Katalyator Imidazol, 2-Methylimidazol, Ethyltriphehylphosphoniumchlorid oder ein anderes Salz desselben, ein Chinolinderivat, wie beispielsweise in der EP-B-10805 beschrieben, ein primäres, sekundäres oder tertiäres Aminophenol, Aluminiumacetylacetonat oder ein Toluolsulfonsäuresalz oder eine Mischung aus verschiedenen der genannten Katalysatoren.

Als Füllstoffe kommen glycidylgruppenfunktionalisierte kristalline Kieselsäuremodifikationen in Betracht. Üblicherweise werden sie in dem genannten Bereich von 10 bis 50 Gew.-% bezogen auf das Gesamtgewicht des Pulverlackes eingesetzt. In einigen Fällen sind jedoch auch Füllstoffanteile von mehr als 50 Gew.-% möglich.

Zu den kristallinen Kieselsäuremodifikationen zählen Quarz, Cristobalit, Tridymit, Keatit, Stishovit, Melanophlogit, Coesit und fasrige Kieselsäure. Die kristallinen Kieselsäuremodifikationen sind glycidylgruppenfunktionalisiert, wobei die Glycidylgruppenfunktionalisierung durch eine Oberflächenbehandlung erzielt wird. Es handelt sich dabei beispielsweise um Kieselsäuremodifikationen auf der Basis von Quarz, Cristobalit und Quarzgut, die hergestellt werden durch Behandlung der kristallinen Kieselsäuremodifikationen mit Epoxisilanen. Die glycidylgruppenfunktionalisierten Kieselsäuremodifikationen sind auf dem Markt beispielsweise erhältlich unter der Bezeichnung Silbond^{R} 600 EST und Silbond^{R} 6000 EST (Hersteller: Quarzwerke GmbH) und werden hergestellt durch Umsetzung von kristallinen Kieselsäuremodifikationen mit Epoxisilanen.

Vorteilhafterweise enthalten die erfindungsgemäßen Pulverlacke 10 bis 40 Gew.-%, bezogen auf das Gesamtgewicht des Pulverlackes, an glycidylgruppenfunktionalisierten kristallinen Kieselsäuremodifikationen.

Die Pulverlacke können noch weitere anorganische Füllstoffe und Pigmente, beispielsweise Titanoxid, Bariumsulfat und Füllstoffe auf Silikatbasis, wie z.B. Talkum, Kaolin, Magnesium-, Aluminiumsilikate, Glimmer und ähnliche enthalten. Außerdem können die Pulverlacke ggf. noch Hilfsmittel und Additive enthalten. Beispiele hierfür sind Verlaufsmittel, Rieselhilfen und Entgasungsmittel, wie beispielsweise Benzoin.

Die carboxylgruppen- und hydroxylgruppenhaltigen Polyester sind dabei nach den üblichen Methoden (vgl. z.B. Houben Weyl, Methoden der organischen Chemie, 4. Auflage, Band 14/2, Georg Thieme Verlag, Stuttgart 1961) herstellbar.

Als Carbonsäurekomponente zur Herstellung der Polyester sind aliphatische, cycloaliphatische und aromatische Di- und Polycarbonsäuren geeignet, wie z.B. Phthalsäure, Terephthalsäure, Isophthalsäure, Trimellithsäure, Pyromellithsäure, Adipinsäure, Bernsteinsäure, Glutarsäure, Pimelinsäure, Suberinsäure, Acelainsäure, Sebacinsäure u.ä. Die Säuren können dabei auch in Form ihrer veresterungsfähigen Derivate (z.B. Anhydride) oder ihrer umesterungsfähigen Derivate (z.B. Dimethylester) eingesetzt werden.

Als Alkoholkomponente zur Herstellung der Polyester sind die üblicherweise eingesetzten Di- und/oder Polyole geeignet, z.B. Ethylenglykol, Propandiol-1,2 und -1,3, Butandiole, Diethylenglykol, Triethylenglykol, Tetraethylenglykol, Hexandiol-1,6, Neopentylglykol, 1,4-Dimethylolcyclohexan, Glycerin, Trimethylolethan, Trimethylolpropan, Pentaerythrit, Ditrimethylolpropan, Diglycerin u.ä.. Die so erhaltenen Polyester können dabei einzeln oder als Mischung verschiedener Polyester eingesetzt werden.

Neben den geschilderten Pulverlacken sind auch mittels Strahlung härtbare Pulver einsetzbar. Insbesondere kommen mit UV-Licht oder Elektronenstrahlen härtbare Pulver in Betracht. Solche sind beispielsweise in der EP-Anmeldung 0585742 beschrieben.

Die erfindungsgemäßen UV-härtbaren Pulverlacke bestehen üblich aus einem festen, ungesättigten Polyester (Maleat) und einer copolymerisierbaren festen Härtungskomponente, wie z.B. (Meth)-acrolylgruppen enthaltene feste Polyurethane (s. EP 0 585 742), oder feste Vinylethergruppen enthaltene Polymere (s. WO 93/25596).

Als Polyester kommen die in der EP 0 585 742 geschilderten Verbindungen in Betracht. Copolymerisierbare Härter sind ebenfalls aus dieser Patentanmeldung bekannt.

Als copolymerisierbare Härtungskomponente können aber auch feste Polyesteracrylate oder andere vinyl- oder acrylgruppenhaltige Copolymere, wie sie zum Beispiel in der US-A-3 574 303 beschrieben werden. Beispiele für vinylgruppenhaltige und acrylgruppenhaltige sind in WO 93/25596 enthalten.

Die Herstellung der Pulverlacke erfolgt nach bekannten Methoden (vgl. z.B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und ggf. durch Sichten und Sieben auf die gewünschte Korngrößenverteilung eingestellt.

Die Korngrößenverteilung wird so eingestellt, daß mindestens 90 Massenprozent der Pulverlackteilchen eine Teilchengröße zwischen 1 und 120 µm, vorzugsweise 1 und 100 µm aufweisen. Bevorzugt werden Pulverlacke eingesetzt, bei denen mindestens 90 Massenprozent der Pulverlackteilchen eine Teilchengröße zwischen 1 und 60 µm, vorzugsweise zwischen 4 und 25 µm aufweisen.

Vor der Beschichtung mit den beschriebenen Pulverlacken wird das zu beschichtende Substrat erwärmt. Dies geschieht erfindungsgemäß mittels Mikrowellenstrahlung. Mittels dieser Behandlung ist es erfindungsgemäß überraschenderweise möglich, eine optimale Beschichtung mit Pulverlacken zu erreichen.

Ganz besondere Beachtung bei der Ausführung von Beschichtungen auf den hier ins Auge gefaßten Werkstoffen erfordert nämlich der Einfluß der Holzfeuchte. Anders als bei Metallen beschränkt sich die Anwesenheit von Feuchtigkeit nicht auf die Oberflächen. Holz als hygroskopischer Werkstoff enthält während seiner gesamten Nutzungsdauer Feuchtigkeit, die in Abhängigkeit von den Umweltbedingungen mehr oder weniger hoch ist. Die Holzfeuchte steht im Gleichgewicht mit der relativen Luftfeuchte der Umgebung. Abhängig vom Einsatz (innen, außen) werden Holz- und Holzwerkstoffe im Trocknungsprozeß auf die einsatzbedingten Mittelwerte eingestellt. Beim Inneneinsatz beträgt die Holzfeuchte in der Regel ca. 4-8 % (bei manchen Holzarten können Abweichungen vorliegen) und für den Außeneinsatz zwischen 10 und 24 %. Oberhalb 8 % muß beim Beschichten von Holzwerkstoffen mit hitzehärtbaren Lackmaterialien zunehmend mit Qualitätsproblemen gerechnet werden.

Im Falle der elektrostatischen Beschichtung von Holz und Holzwerkstoffen mit Pulverlacken bestimmt die Holzfeuchte im wesentlichen die elektrische Leitfähigkeit der Materialien. Auf die Qualität und Haltbarkeit der Beschichtungen wirken sich hohe Feuchtewerte in der Regel negativ aus. Während der zum Aufschmelzen und Aushärten der Pulverlackschicht erforderlichen Zuführung von Wärme treten in Abhängigkeit von der Werkstücktemperatur und der Dauer der Wärmeeinwirkung Feuchtigkeit und andere leicht flüchtige Holzinhaltsstoffe gasförmig aus. Mit der Stärke der Entfeuchtung bzw. der Entgasung steigt die Gefahr der Blasenbildung im Beschichtungsfilm. Poren und Blasen in der Beschichtung führen zu einer mehr oder weniger starken Qualitätsbeeinträchtigung. Mit der Feuchtigkeitsabgabe während der Erwärmung können aber auch Verfärbungen, Verformungen und Schwundrisse an den Holzwerkstücken verbunden sein. Spätere feuchte Aufnahme bedingt eine Quellung und damit den Aufbau von inneren Spannungen in der Grenzschicht zwischen Trägermaterial und Beschichtung als Ursache von Schäden.

Mit der erfindungsgemäßen Behandlung mittels Mikrowellenstrahlung wird nun erreicht, daß die Oberfläche des Holzes nicht austrocknet. Gleichzeitig kommt es aber überraschenderweise zu einer Entgasung des Holzes, so daß leicht flüchtige Stoffe, insbesondere feuchte, aber auch Terpenkohlenwasserstoffe aus Koniferemholz aus den oberen Schichten des Holzwerkstoffes bereits vor der Beschichtung entweichen können oder während der Aufheizphase (Schmelzphase des Pulvers) entweichen, so daß die anschließende Reaktionsphase durch diese nicht gestört wird. Damit wird erfindungsgemäß überraschend die Blasenbildung in der Lackschicht verhindert.

Erfindungsgemäß wird mittels der Mikrowelle die Oberfläche des Holzes auf 80 - 120 °C, vorzugsweise ca. 100 ° C erhitzt. Im Anschluß hieran wird der Pulverlack auf die Substratoberfläche aufgebracht. Dies geschieht im allgemeinen mittels elektrostatischer Spritzverfahren, vorzugsweise jedoch mittels Tribo-Verfahren.

Zum gleichmäßigen Schichtaufbau des Pulverlackes auf der Oberfläche von Holzwerkstoffen im elektrostatischen Pulversprühverfahren ist ein Oberflächen-Widerstand von ca. 10⁹ bis 10¹⁰ Ohm erforderlich. Thermisch getemperte Holzwerkstoffe besitzen bei Erreichung einer Oberflächentemperatur von 80 °C allgemein einen Oberflächenwiderstand von 10¹² Ohm und lassen sich elektrostatisch deshalb nicht beschichten. Auch der Lackschichtaufbau im Tribo-Verfahren ist erschwert. Dünnere Schichten (ca. 50 µm und darunter) sind zwar möglich; sind jedoch wegen der Inhomogenität des Holzwerkstoffes sehr ungleichmäßig.

Die mittels Mikrowelle vorgetemperten Holzwerkstoffe besitzen dagegen einen Oberflächenwiderstand (bei gleicher Oberflächentemperatur) von ca. 10⁸ bis 10⁹ Ohm. Dieses wird hervorgerufen durch den Transport der Feuchte aus den tieferliegenden Schichten des Holzes an die Oberfläche, weil bei dieser Art der Erwärmung auch das Innere des Holzwerkstoffes stärker erwärmt wird als die Oberfläche. Beim Verlassen der Mikrowelle fällt der durch die elektromagnetischen Wellen hervorgerufene Dampfdruck im inneren der Werkstoffkapilaren ab, so daß weiterer Transport der Feuchte unterbleibt. In der nachfolgenden Periode der Abkühlung der Oberfläche (durch die Beschichtung und dem Beschichtungsstoff) und der Wiedererwärmung der Oberfläche durch Infrarotstrahlen oder Konvektion werden die Innenpartien der Holzwerkstoffe nicht mehr tangiert, da Holz als sehr schlechter Wärmeleiter die Energie von der Oberfläche kaum in die Tiefe leitet.

In einer weiteren Stufe wird der Pulverlack bei Temperaturen von 100 bis 170 °C, vorzugsweise 120 bis 160°C gesintert. Zum Sintern des Pulverlackes auf Holzwerkstoffen ist elektromagnetische Strahlung ungeeignet. In der Regel wird der Pulverlack entweder konvektiv oder durch Infrarotstrahlen aufgeheizt. Der Aufheizgradient bei Verwendung von Infrarotstrahlen ist deutlich besser als bei der konvektiven Wärmeübertragung. Wegen der hohen Durchdringungstiefe der IR-Strahlen besteht jedoch die Gefahr des Auskochens des Kapillarwassers auch im tiefer liegenden Schichten oder z.B. bei furnierten Teilen zum "Aufkochen" des Leimes. Deshalb sollten lediglich mittel- und langwellige Infrarotstrahler verwendet werden. Bevorzugt wird eine Kombination von IR-Strahlern für den Sinterprozeß und konvektive Wärmeübertragung (Düsentrockner) für die anschließende Härtungsreaktion. Bei strahlenhärtbaren Pulverlacken wird lediglich Wärme für den Sinterprozeß benötigt. Bei UV-härtbaren Pulverlacken sollten die Härtung direkt nach dem Sintern einsetzen, da der Abfall der Temperatur die Reaktivität des Pulvers beeinträchtigt. Deshalb wird die Härtungsreaktion in der Regel bei Temperaturen zwischen 80 und 160 °C, vorzugsweise zwischen 90 und 150 °C, durchgeführt.

Bei besonders empfindlichen Substraten, grobporigen Holzarten oder zusammengesetzten Holzwerkstoffen, wie z.B. Leimholz usw. ist es geraten, vor der Pulverbeschichtung eine möglichst elektrisch leitfähig eingestellte Beschichtung, z.B. einen Wasserlack, auf die Holzwerkstoffoberfläche aufzutragen. Prinzipiell ist es möglich, diese Beschichtung vor der Temperung, z.B. durch Walzen, Gießen oder Spritzen, aufzutragen und anschließend mittels Mikrowelle zu trocknen. Nachteilig wirkt sich lediglich die hohe Werkstofftemperatur auf das anschließende Schleifen aus. Deshalb ist diese Arbeitsweise lediglich für UV-härtbare Wasserlacke zu empfehlen. Mittels Mikrowelle werden Wasserlacke in der Regel nur auf ca. 6 % Restfeuchte getrocknet. Weitere Trocknung ist wirtschaftlich nicht zu empfehlen, da die zusätzliche Energie lediglich zum Aufheizen des Holzwerkstückes führt, während die Wasserlackschicht durch Feuchte vom Untergrund her angereichert wird. Bei geeigneter Formulierung können UV-härtbare Wasserlacke auch bei einem Wassergehalt von 6 % schon ohne Nachteile gehärtet werden. Diese Beschichtungen sind auch bei höheren Oberflächentemperaturen glättbar, so daß eine Abkühlung der Teile vor dem Schleifen nicht notwendig ist. Wichtig ist, daß diese Beschichtung im Temperaturbereich zwischen 60 und 120 °C noch wasserdampfpermeabel ist, um ein Dampfstau unterhalb der Beschichtung im Holzwerkstoff zu vermeiden. Nicht-permeable Beschichtungen, wie Polyurethangrundlacke, sind für diese Verfahren nicht geeignet. Durch eine schlechte Permeabilität können die gestauten Gase und die Feuchte erst oberhalb von 100 °C teilweise entweichen, wodurch es zur Blasenbildung während der Pulverhärtungsreaktion kommen muß. Besonders geeignet für diese Beschichtung sind Kombinationen aus UV-härtbaren Acrylatdispersionen oder Emulsionen mit physikalisch trocknenden Acrylatdispersionen, weil diese Lacke eine um etwa im Faktor 10 höhere Wasserdampfdurchlässigkeit besitzen als duromere Verbindungen.

Als Wasserlacke sind beispielsweise die in EP 022 003 und EP 0 089 497 beschriebenen Verbindungen geeignet.

Im folgenden wird die Erfindung anhand von Beispielen näher beschrieben:

### Beispiele: Wasserleitlacke

| Wasserleitlack 1: | | |
|---|---|---|
| Basis: PUR-Dispersion dunkelgrau | | |
| 40,0 % | PUR-Dispersion | (Daotan VTW 40 %-ig) |
| 1,2 % | Dispergierhilfe | (Disperbyk 182) |
| 1,2 % | Butylglykol | |
| 2,6 % | Netzmittel | |
| 0,5 % | Antiabsetzmittel | (Aerosil 380) |
| 1,9 % | Leitruß | (Ketjenblack) |
| 28,0 % | Titanoxid | (Titan Rutil) |
| 11,2 % | Füllstoff | (Blank fixe, Talkum) |
| 13,4 % | Wasser | |
| Dispergieren auf einer Rührwerksmühle | | |
| Dichte = 1,55; hochviskos, thixotrop | | |

Zum Spritzen mit etwa 15 % Wasser verdünnen
Trocknung: ca. 5-8 Min. ablüften und anschließend 15-20 Min. bei 80 °C
Oberflächenwiderstand Ro = < 100 kΩ

| Wasserleitlack 2: | | |
|---|---|---|
| Basis: PUR-Dispersion semitransparent | | |
| 40,0 % | PUR-Dispersion | (Daotan VTW 40 %-ig) |
| 1,2 % | Dispergierhilfe | (Disperbyk 182) |
| 1,2 % | Butylglykol | |
| 2,6 % | Netzmittel | |
| 0,5 % | Antiabsetzmittel | (Aerosil 380) |
| 30,0 % | Leitglimmer | (Minatec) |
| 11,1 % | Füllstoff | (Silicat, Talkum) |
| 13,4 % | Wasser | |
| Dispergieren auf einer Rührwerksmühle | | |
| Dichte = 1,45; hochviskos, thixotrop | | |

Zum Spritzen mit etwa 15 % Wasser verdünnen
Trocknung: ca. 5-8 Min. ablüften und anschließend 15-20 Min. bei 80 °C
Oberflächenwiderstand Ro = < 10⁸ Ω

Beide Richtrezepturen kennen bei Bedarf mit 3 bis 5 % eines zur Härtung von Wasserlacken geeigneten Isocyanats modifiziert werden.

| Wasserleitlack 3: UV-härtbar | | |
|---|---|---|
| Basis: UV-Dispersion, Acrylatdispersion | | |
| grau | | |
| 20,0 % | UV-Dispersion | (Halwerdrol UV) |
| 20,0 % | Acrylatdispersion | (Uramul XP) |
| 1,2 % | Dispergierhilfe | (Disperbyk 182) |
| 2,0 % | Netzmittel | |
| 0,5 % | Antiabsetzmittel | (Aerosil 380) |
| 1,5 % | Leitruß | (Ketjenblack) |
| 25,0 % | Titanoxid | (Titan Rutil) |
| 11,0 % | Füllstoff | (Blank fixe, Talkum) |
| 3,2 % | Photoinitiator | (Irgacure 1273) |
| 0,6 % | Verlaufsmittel | |
| Dispergieren auf einer Rührwerksmühle | | |
| Dichte = 1,39; hochviskos, thixotrop | | |

Beschichtungstechnik: Walzen
Verbrauch: 20-30 g/m² je Schicht
Trocknungszeit: 2-5 Min. bei 80 °C Düsentrockner
UV-Bestrahlungsintensität: 600 mJ/m² (Lightbag IL 390)
Lampentyp: Kombination Galium dotiert + Standard

### Beispiele: Pulverlacke

| Pulverlack 1: | | |
|---|---|---|
| Basis: Epoxy-Polyester weiß | | |
| 40,0 % | Carboxy PES¹⁾ | (Grilesta V 7206) |
| 40,0 % | Epoxydharz Typ 3 ½ | (Epikote 3003) |
| 0,5 % | Verlaufsmittel | (Acronal 4F) |
| 14,5 % | Titanoxid | (Titan Rutil 2160) |
| 5,0 % | Füllstoff | (Silikat) |

| | | |
|---|---|---|
| ¹⁾ Carboxypolyester, schnellhärtend; EP/SP = 75 °C Extrudieren, mahlen und sieben, Kornfeinheit unter 50 µm | | |

Härtung: 30 Min. 140 °C

| Pulverlack 2: | | |
|---|---|---|
| Basis: Epoxy-Polyester semitransparent | | |
| 40,0 % | Carboxy PES¹⁾ | (Grilesta V 7206) |
| 40,0 % | Epoxydharz Typ 3½ | (Epikote 3003) |
| 0,5 % | Verlaufsmittel | (Acronal 4F) |
| 19,5 % | Füllstoff | (Silikat) |

| | | |
|---|---|---|
| ¹⁾ Carboxypolyester, schnellhärtend; EP/SP = 75 °C Extrudieren, mahlen und sieben, Kornfeinheit unter 50 µm | | |

Härtung: 30 Min. 140 °C

| Pulverlack 3: UV-härtbar | | |
|---|---|---|
| Basis: Maleat + Acrylolurethan transparent | | |
| 67,0% | Maleat²⁾ | (Alftalat VAN 1743) |
| 29,0 % | Acrylolurethan³⁾ | (Additol VXL 1395) |
| 3,0 % | Photoinitiator | (Irgacure 184) |
| 1,0 % | Verlaufsmittel | (Byk 364 P) |

| | | |
|---|---|---|
| ²⁾ = ungesättigter Polyester wie in EP 0 585 742 Al; SP ca. 90 °C | | |
| ³⁾ = Acrylat wie in EP 0 585 742 Al; SP ca. 88 °C Extrudieren, mahlen und sieben, Kornfeinheit unter 50 µm | | |

Härtung: Schmelzen 5 Min. 140 °C + Bestrahlungsdosis 400 mJ/cm² (Lightbag 390)

| Pulverlack 4: UV-härtbar | | |
|---|---|---|
| Basis: Maleat + Acrylolurethan weiß | | |
| 44,0 % | Maleat²⁾ | (Alftalat VAN 1743) |
| 29,0 % | Acrylolurethan³⁾ | (Additol VXL 1395) |
| 20,0 % | Titanoxid | (Titzan Rutil) |
| 4,0 % | Photoinitiator | (Darocure 64263) |
| 3,0 % | Verlaufsmittel | (Additol XL 496) |

| | | |
|---|---|---|
| ²⁾ = ungesättigter Polyester wie in EP 0 585 742 A1; SP ca. 90 °C | | |
| ³⁾ = Acrylat wie in EP 0 585 742 Al; SP ca. 88 °C Extrudieren, mahlen und sieben, Kornfeinheit unter 50 µm | | |

Härtung: Schmelzen 5 Min. 140 °C + Bestrahlungsdosis 600 mJ/cm² (Lightbag 390)

### Beschichtungsbeispiele Pulverlacke:

### Beschichtungsbeispiel 1:

MDF mit Epoxy-Polyester-Pulver
weiß

Mitteldichte Faserplatte (MDF) mit profilierten Kanten
* die Kanten der MDF-Platte werden separat mit einem 2K-PUR Grundierfüller isoliert und grundiert, getrocknet und geschliffen
* die so vorbereitete Platte wird in einem Mikrowellenkanal (2 Min. bei 5x2 kW Gen. Leistung) bis auf eine Oberflächentemperatur 100 °C erhitzt
* Anschließend wird mit einer Tribosprühvorrichtung das Pulver aus Beispiel 1 rundum aufgetragen. Auftragsmenge: Fläche ca. 80 g/m², Kante ca. 50 g/m²
* Pulver sintern im Umluftofen bei 160 °C ca. 2-3 Min. und anschließend
* Härten 30 Min. 140 °C

Ergebnis: Gleichmäßige Beschichtung, leicht strukturiert im Kantenbereich etwas zu dünn.

### Beschichtungsbeispiel 2:

### MDF mit Epoxy-Polyester-Pulver und Leitgrund weiß

Mitteldichte Faserplatte (MDF) mit profilierten Kanten
* die Kanten der MDF-Platte werden separat mit einem 2K-PUR Grundierfüller isoliert und grundiert, getrocknet und geschliffen und anschließend
* mit dem Wasserleitlack 1 übergespritzt; Auftragsmenge ca. 50 g/m²
* die so vorbereitete Platte wird im Walzverfahren mit Wasserleitlack 3 beschichtet (Auftragsmenge ca. 30 g/m²) und in einem Mikrowellenkanal (2 Min. bei 5x2 kW Gen. Leistung) getrocknet,
* und im UV-Kanal bei Strahlendosis 600 mJ/cm² gehärtet.
* Anschließend wird mit einer Tribosprühvorrichtung das Pulver aus Beispiel 1 rundum aufgetragen. Auftragsmenge: Fläche ca. 100 g/m², Kante ca. 80 g/m²
* Pulver sintern im Umluftofen bei 160 °C ca. 2-3 Min. und anschließend
* Härten 30 Min. 140 °C

Ergebnis: Gleichmäßige Beschichtung, wenig strukturiert.

### Beschichtungsbeispiel 3:

MDF mit UV-Pulver und Leitgrund
weiß

Mitteldichte Faserplatte (MDF) mit profilierten Kanten
* die Kanten der MDF-Platte werden separat mit einem 2K-PUR Grundierfüller isoliert und grundiert, getrocknet und geschliffen und anschließend
* mit dem Wasserleitlack 1 übergespritzt; Auftragsmenge ca. 50 g/m²
* die so vorbereitete Platte wird im Walzverfahren mit Wasserleitlack 3 beschichtet (Auftragsmenge ca. 30 g/m²) und in einem Mikrowellenkanal (2 Min. bei 5x2 kW Gen. Leistung) getrocknet,
* und im UV-Kanal bei Strahlendosis 600 mJ/cm² gehärtet.
* Anschließend wird mit einer Tribosprühvorrichtung das Pulver aus Beispiel 4 rundum aufgetragen. Auftragsmenge: Fläche ca. 70 g/m², Kante ca. 60 g/m²
* Pulver sintern im Umluftofen bei 140 °C ca. 2-3 Min. und anschließend
* UV-Härten bei ca. 120 °C und Strahlendosis 600 mJ/m² (Galium dotierte Strahler)

Ergebnis: Gleichmäßige Beschichtung, kaum strukturiert.

### Beschichtungsbeispiel 4:

Massive Buche gedämpft mit Epoxy-Polyester-Pulver
semitransparent

Gedämpfte massive Rotbuche mit profilierten Kanten
* Die feingeschliffenen Teile werden mittels Tribosprühvorrichtung mit dem Pulver aus Beispiel 2 rundum beschichtet. Auftragsmenge: Fläche und Kante ca. 40 g/m²
* Pulver sintern im Umluftofen bei 160 °C ca. 2-3 Minuten und anschließend
* Härten 30 Min. bei 140 °C.

Ergebnis: Kein gleichmäßiger Schichtaufbau möglich, Beschichtung stark aufgeschäumt.

### Beschichtungsbeispiel 5:

Massive Buche gedämpft mit Epoxy-Polyester-Pulver
semitransparent

Gedämpfte massive Rotbuche mit profilierten Kanten
* Die feingeschliffenen Teile werden im Konvektionsofen auf eine Oberflächentemperatur von ca. 100 °C erhitzt und anschließend
* mittels Tribosprühvorrichtung mit dem Pulver aus Beispiel 2 rundum beschichtet. Auftragsmenge: Fläche und Kante ca. 70 g/m²
* Pulver sintern im Umluftofen bei 160 °C ca. 2-3 Minuten und anschließend
* Härten 30 Min. bei 140 °C.

Ergebnis: Kein gleichmäßiger Schichtaufbau möglich, Beschichtung stark aufgeschäumt.
Leimfugen stark sichtbar.

### Beschichtungsbeispiel 6:

Massive Buche gedämpft mit UV-Pulver
transparent

Gedämpfte massive Rotbuche mit profilierten Kanten
* Die feingeschliffenen Teile werden im Konvektionsofen auf eine Oberflächentemperatur von ca. 100 °C erhitzt und anschließend
* mittels Tribosprühvorrichtung mit dem Pulver aus Beispiel 3 rundum beschichtet. Auftragsmenge: Fläche und Kante ca. 70 g/m²
* Pulver sintern im Umluftofen bei 140 °C ca. 2-3 Minuten und anschließend
* UV-Härten bei ca. 120 °C und Strahlendosis 400 mJ/cm².

Ergebnis: Kein gleichmäßiger Schichtaufbau möglich, Beschichtung stark aufgeschäumt.
Leimfugen stark sichtbar.

### Beschichtungsbeispiel 7:

Massive Buche gedämpft mit Epoxy-Polyester-Pulver
semitransparent

Gedämpfte massive Rotbuche mit profilierten Kanten
* Die feingeschliffenen Teile werden im Mikrowellenkanal (2 Min. bei 5x2 kW Gen. Leistung) auf eine Oberflächentemperatur von ca. 100 °C erhitzt und anschließend
* mittels Tribosprühvorrichtung mit dem Pulver aus Beispiel 2 rundum beschichtet. Auftragsmenge: Fläche und Kante ca. 70 g/m²
* Pulver sintern im Umluftofen bei 160 °C ca. 2-3 Minuten und anschließend
* Härten 30 Min. bei 140 °C.

Ergebnis: Gleichmäßiger Schichtaufbau, Mikroschaum in der Beschichtung

### Beschichtungsbeispiel 8:

Massive Buche gedämpft mit UV-Pulver
transparent

Gedämpfte massive Rotbuche mit profilierten Kanten
* Die feingeschliffenen Teile werden im Mikrowellenkanal (2 Min. bei 5x2 kW Gen. Leistung) auf eine Oberflächentemperatur von ca. 100 °C erhitzt und anschließend
* mittels Tribosprühvorrichtung mit dem Pulver aus Beispiel 3 rundum beschichtet. Auftragsmenge: Fläche und Kante ca. 70 g/m²
* Pulver sintern im Umluftofen bei 140 °C ca. 2-3 Minuten und anschließend
* UV-Härten bei ca. 120 °C und Strahlendosis 400 mJ/m².

Ergebnis: Gleichmäßiger Schichtaufbau, kaum Mikroschaum in der Beschichtung

### Beschichtungsbeispiel 9:

Massive Buche gedämpft mit Epoxy-Polyester-Pulver und Leitgrund
semitransparent

Gedämpfte massive Rotbuche mit profilierten Kanten
* Die Kanten und die Fläche der Platte werden separat mit dem Wasserbasislack 2 (Auftragsmenge ca. 50 g/m² naß im Spritzverfahren) beschichtet und in einem Mikrowellenkanal (2 Min. bei 5x2 kW Gen. Leistung) getrocknet und über Nacht abgelagert.
* Anschließend werden die Teile geglättet und mittels einer Tribosprühvorrichtung mit dem Pulver aus Beispiel 2 rundum beschichtet. Auftragsmenge: Fläche und Kante ca. 70 g/m²
* Pulver sintern im Umluftofen bei 160 °C ca. 2-3 Minuten und anschließend
* Härten 30 Min. bei 140 °C.

Ergebnis: Gleichmäßige semitransparente Beschichtung, wenig strukturiert.

### Beschichtungsbeispiel 10:

Massive Buche gedämpft mit UV-Pulver und Leitgrund
transparent

Gedämpfte massive Rotbuche mit profilierten Kanten
* Die Kanten und die Fläche der Platte werden separat mit dem Wasserbasislack 2 (Auftragsmenge ca. 50 g/m² naß im Spritzverfahren) beschichtet und in einem Mikrowellenkanal (2 Min. bei 5x2 kW Gen. Leistung) getrocknet und über Nacht abgelagert.
* Anschließend werden die Teile geglättet und mittels einer Tribosprühvorrichtung mit dem Pulver aus Beispiel 3 rundum beschichtet. Auftragsmenge: Fläche und Kante ca. 60 g/m²
* Pulver sintern im Umluftofen bei 140 °C ca. 2-3 Minuten und anschließend
* UV-Härten bei ca. 120 °C und Strahlenintensität 400 mJ/cm².

Ergebnis: Gleichmäßige, leicht verschleierte Beschichtung, kaum strukturiert.

## Patentansprüche

1. Verfahren zur Herstellung eines Schichtstoffes, enthaltend ein Substrat aus einem wärmeempfindlichen Werkstoff und eine darauf aufgebrachte Pulverlackschicht, **dadurch gekennzeichnet, dass**
a) gegebenenfalls eine Füllschicht aufgebracht wird,
b) gegebenenfalls wenigstens ein flüssiger Lack aufgebracht wird,
c) das Substrat mittels Mikrowellenstrahlung erhitzt wird,
d) gegebenenfalls der flüssige Lack gehärtet wird,
e) der Pulverlack aufgebracht wird,
f) der Pulverlack auf Sintertemperatur erhitzt wird und
g) die Lackschicht anschließend gehärtet wird.

2. Verfahren nach Anspruch 1, **dadurch gekennzeichnet, dass** der Pulverlack in Stufe e) mittels elektrostatischer Spritzverfahren oder Tribo-Verfahren aufgetragen wird.

3. Verfahren nach Anspruch 1 oder 2, **dadurch gekennzeichnet, dass** die mittlere Teilchengröße des Pulverlacks zwischen 1 und 120, vorzugsweise 1 und 60 und besonders bevorzugt 4 und 25 µm liegt.

4. Verfahren nach einem der Ansprüche 1 bis 3, **dadurch gekennzeichnet, dass** der Pulverlack strahlenhärtbar ist.

5. Verfahren nach Anspruch 4, **dadurch gekennzeichnet, dass** der Pulverlack mittels UV-Strahlung härtbar ist.

6. Verfahren nach einem der Ansprüche 1 bis 5, **dadurch gekennzeichnet, dass** flüssige Lack ein wässriger Lack ist.

7. Verfahren nach Anspruch 6, **dadurch gekennzeichnet, dass** der wässrige Lack eine physikalisch trockende Polyurethandispersion sowie gegebenenfalls elektrisch leitfähige Pigmente enthält.

8. Verfahren nach einem der Ansprüche 1 bis 7, **dadurch gekennzeichnet, dass** der wässrige Lack eine physikalisch trockende Acrylatdispersion in Kombination mit einer UV-härtbaren Dispersion, vorzugsweise eine Polyurethandispersion, enthält.

9. Verfahren nach einem der Ansprüche 1 bis 8, **dadurch gekennzeichnet, dass** der flüssige Lack mittels UV-Strahlung gehärtet wird.

10. Verfahren nach einer der Ansprüche 1 bis 9, **dadurch gekennzeichnet, dass** in Stufe c) auf 80 bis 120, vorzugsweise ca. 100 °C, in Stufe f) 100 bis 170, vorzugsweise 120 bis 160 °C, und in Stufe g) 80 bis 160, vorzugsweise 90 bis 150 °C, erhitzt wird.

11. Verfahren nach einem der Ansprüche 1 bis 10, **dadurch gekennzeichnet, dass** das Erhitzen in Stufe f) thermisch, vorzugsweise durch Konvektion oder Infrarotstrahlung erfolgt.

12. Verfahren nach einem der Ansprüche 1 bis 11, **dadurch gekennzeichnet, dass** die Härtung in Stufe g) mittels Strahlung erfolgt.

13. Verfahren nach Anspruch 12, **dadurch gekennzeichnet, dass** die Härtung mittels UV- oder Elektronenstrahlung erfolgt.

14. Verfahren nach einem der Ansprüche 1 bis 13, **dadurch gekennzeichnet, dass** ein Pulverlack auf der Basis von Epoxidharzen und carboxylhaltigen Polyestern zum Einsatz kommt.

15. Verfahren nach Anspruch 14, **dadurch gekennzeichnet, dass** der Pulverlack
A) mindestens ein Epoxidharz mit einem Epoxidäquivalentgewicht von 300 bis 5.500, vorzugsweise 800 bis 3.000, und
B) mindestens einen Polyester mit einer Säurezahl von 25 bis 120 mg KOH/g und einer OH-Zahl von größer als 10 mg KOH/g,
C) mindestens ein Epoxidharz mit einem Epoxidäquivalentgewicht von 150 bis 3.000, vorzugsweise 150 bis 400, und
D) gegebenenfalls Katalysatoren, Hilfsstoffe und pulverlacktypische Additive, wie Entgasungsmittel, Verlaufmittel, Radikalfänger oder Antioxidantien,
enthält.

16. Verfahren nach Anspruch 15, **dadurch gekennzeichnet, dass** die Komponenten A oder C Epoxidharze auf der Basis von Bisphenol A und/oder Bisphenol F, vorzugsweise mit einem Epoxidäquivalentgewicht von 500 bis 2.000 und/oder Epoxidharze vom Novolactyp, vorzugsweise mit einem Epoxidäquivalentgewicht von 500 bis 1.000, sind.

17. Verwendung der nach dem Verfahren gemäß einem der Ansprüche 1 bis 16 hergestellten Schichtstoffe für aus Holzwerkstoffen gefertigte Gegenstände, vorzugsweise beschichtete Holzplatten, Möbel und Möbelteile.

## Claims

1. A process for producing a laminate comprising a substrate comprising a heat-sensitive material and a powder coating film applied to it, **characterized in that**
a) if desired a filling coat is applied,
b) if desired at least one liquid coating is applied,
c) the substrate is heated by microwave radiation,
d) if desired the liquid coating is hardened,
e) the powder coating is applied,
f) the powder coating is heated to sintering temperature, and
g) the paint coat is subsequently hardened.

2. The process according to claim 1, **characterized in that** the powder coating in step e) is applied by electrostatic spraying processes or tribo processes.

3. The process according to claim 1 or 2, **characterized in that** the average particle size of the powder coating is between 1 and 120, preferably 1 and 60 and with particular preference 4 and 25 µm.

4. The process according to one of claims 1 to 3, **characterized in that** the powder coating is radiation-hardenable.

5. The process according to claim 4, **characterized in that** the powder coating is UV-hardenable.

6. The process according to one of claims 1 to 5, **characterized in that** liquid coating is an aqueous coating material.

7. The process according to claim 6, **characterized in that** the aqueous coating material comprises a physically drying polyurethane dispersion and also, if desired, electrically conductive pigments.

8. The process according to one of claims 1 to 7, **characterized in that** the aqueous coating material comprises a physically drying acrylate dispersion in combination with a UV-hardenable dispersion, preferably a polyurethane dispersion.

9. The process according to one of claims 1 to 8, **characterized in that** the liquid coating is hardened by UV radiation.

10. The process according to one of claims 1 to 9, **characterized in that** heating is carried out in step c) at from 80 to 120°C, preferably about 100°C in step f) 100 to 170°C, preferably 120 to 160°C, and in step g) 80 to 160°C, preferably 90 to 150°C.

11. The process according to one of claims 1 to 10, **characterized in that** the heating in step f) takes place thermally, preferably by convection or infrared radiation.

12. The process according to one of claims 1 to 11, **characterized in that** the hardening in step g) takes place by radiation.

13. The process according to claim 12, **characterized in that** the hardening takes place by UV radiation or electron beams.

14. The process according to one of claims 1 to 13, **characterized in that** a powder coating based on epoxy resins and carboxyl-containing polyesters is employed.

15. The process according to claim 14, **characterized in that** the powder coating comprises
A) at least one epoxy resin having an epoxide equivalent weight of 300 to 5500, preferably 800 to 3000, and
B) at least one polyester having an acid number of 25 to 120 mg KOH/g and an OH number of greater than 10 mg KOH/g,
C) at least one epoxy resin having an epoxide equivalent weight of 150 to 3000, preferably 150 to 400, and
D) if desired, catalysts, auxiliaries and typical powder coatings additives, such as degassing agents, flow agents, free-radical scavengers or antioxidants.

16. The process according to claim 15, **characterized in that** the components A or C are epoxy resins based on bisphenol A and/or bisphenol F, preferably having an epoxide equivalent weight of 500 to 2000, and/or epoxy resins of the novolac type, preferably having an epoxide equivalent weight of 500 to 1000.

17. The use of the laminate produced by the process according to one of claims 1 to 16 for articles fabricated from wood materials, preferably coated wood boards, furniture and parts of furniture.

## Revendications

1. Procédé pour la fabrication d'un stratifié, comportant un subjectile à base d'un matériau sensible à la chaleur et une couche de peinture en poudre appliquée sur celui-ci, **caractérisé en ce que**
a) on applique éventuellement une couche de garnissage,
b) on applique éventuellement au moins une peinture liquide,
c) le subjectile est chauffé par micro-ondes,
d) la peinture liquide est éventuellement durcie,
e) on applique la peinture en poudre,
f) la peinture en poudre est chauffée à la température de frittage et
g) la couche de peinture est ensuite durcie.

2. Procédé selon la revendication 1, **caractérisé en ce que** la peinture en poudre est appliquée dans l'étape e) à l'aide d'un procédé de pistolage électrostatique ou d'un procédé de pulvérisation triboélectrique.

3. Procédé selon la revendication 1 ou 2, **caractérisé en ce que** la taille moyenne de particules de la peinture en poudre est comprise entre 1 et 120, de préférence 1 et 60, et, de façon particulièrement préférée, 4 et 25 µm.

4. Procédé selon l'une quelconque des revendications 1 à 3, **caractérisé en ce que** la peinture en poudre est durcissable par irradiation.

5. Procédé selon la revendication 4, **caractérisé en ce que** la peinture en poudre est durcissable par rayonnement UV.

6. Procédé selon l'une quelconque des revendications 1 à 5, **caractérisé en ce que** la peinture liquide est une peinture à l'eau.

7. Procédé selon la revendication 6, **caractérisé en ce que** la peinture à l'eau contient une dispersion de polyuréthanne séchant physiquement ainsi qu'éventuellement des pigments conducteurs de l'électricité.

8. Procédé selon l'une quelconque des revendications 1 à 7, **caractérisé en ce que** la peinture à l'eau contient une dispersion d'acrylate séchant physiquement, en association avec une dispersion durcissable aux UV, de préférence une dispersion de polyuréthanne.

9. Procédé selon l'une quelconque des revendications 1 à 8, **caractérisé en ce que** la peinture liquide est durcie par irradiation UV.

10. Procédé selon l'une quelconque des revendications 1 à 9, **caractérisé en ce qu'**on chauffe, dans l'étape c), à une température de 80 à 120, de préférence d'environ 100°C, dans l'étape f), à une température de 100 à 170, de préférence de 120 à 160°C, et dans l'étape g), à une température de 80 à 160, de préférence de 90 à 150°C.

11. Procédé selon l'une quelconque des revendications 1 à 10, **caractérisé en ce que** le chauffage dans l'étape f) est effectué thermiquement, de préférence par convection ou rayonnement infrarouge.

12. Procédé selon l'une quelconque des revendications 1 à 11, **caractérisé en ce que** le durcissement s'effectue dans l'étape g) par irradiation.

13. Procédé selon la revendication 12, **caractérisé en ce que** le durcissement s'effectue par rayonnement UV ou irradiation par faisceau d'électrons.

14. Procédé selon l'une quelconque des revendications 1 à 13, **caractérisé en ce qu'**on utilise une peinture en poudre à base de résines époxy et de polyesters contenant des groupes carboxy.

15. Procédé selon la revendication 14, **caractérisé en ce que** la peinture en poudre contient
A) au moins une résine époxy ayant un poids d'équivalent époxy de 300 à 5 500, de préférence de 800 à 3 000, et
B) au moins un polyester ayant un indice d'acide de 25 à 120 mg de KOH/g et un indice de groupes OH de plus de 10 mg de KOH/g,
C) au moins une résine époxy ayant un poids d'équivalent époxy de 150 à 3 000, de préférence de 150 à 400, et
D) éventuellement des catalyseurs, adjuvants et additifs caractéristiques de peintures en poudre, tels qu'agents de dégazage, agents d'étalement, capteurs de radicaux ou antioxydants.

16. Procédé selon la revendication 15, **caractérisé en ce que** les composants A ou C sont des résines époxy à base de bisphénol A et/ou bisphénol F, de préférence ayant un poids d'équivalent époxy de 500 à 2 000, et/ou des résines époxy du type Novolaque, de préférence ayant un poids d'équivalent époxy de 500 à 1 000.

17. Utilisation des stratifiés produits selon le procédé conforme à l'une des revendications 1 à 16, pour de objets fabriqués à partir de matériaux à base de bois, de préférence des panneaux de bois, meubles et pièces de meubles, revêtus.
